# EUROPEAN PATENT APPLICATION

(11) **EP 1 516 894 A1**
(43) Date of publication of application: **23.03.2005**
(21) Application number: 03021276.5
(22) Date of filing: 19.09.2003
(51) Int. Cl.: C09B 23/14, G11B 7/24

(54) **Use of bis-styryl dyes in optical layers for optical data recording**

(71) Applicant: CLARIANT INTERNATIONAL LTD., 4132 Muttenz (CH)
(72) Inventor: Graciet, Jean-Christophe, 68128 Village-Neuf (FR)

(57) **Abstract**

The present invention relates to the use of bis-styryl dyes in optical layers for optical data recording, preferably for optical data recording using a laser with a wavelength up to 450 nm.

The invention further relates to a write only read many (WORM) type optical data recording medium capable of recording and reproducing information with radiation of blue laser, which employs a bis-styryl type dye in the optical layer.

## Description

The present invention relates to the use of bis-styryl dyes in optical layers for optical data recording, preferably for optical data recording using a laser with a wavelength up to 450 nm.
The invention further relates to a write only read many (WORM) type optical recording medium capable of recording and reproducing information with radiation of blue laser, which employs a bis-styryl dye in the optical layer.

Recently, organic dyes have attracted considerable attentions in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stabilities, durability for storage or non-toxicity.

For industrial application, these dyes have to be suitable for the spin coating process to prepare thin films, i.e. they have to be sufficiently soluble in the organic solvents generally applied in the spin coating process.

WORM (write once read many) type and erasable type optical recording media reproduce information by detecting variations in the reflectivity caused by physical deformation, by alterations of optical characteristics as well as by phase and magnetic properties of a recording layer before and after the recording.
Recordable compact discs (CD-R) are widely known as a WORM type optical recording medium. Recently, digital versatile discs (DVD) with increased information storage capabilities up to 4.7 GBytes have been commercialized.
The DVD-R technology adopts as a light source a red diode laser with a wavelength of 630-670 nm. Thereby the pit size and track interval can be reduced, increasing the information storage capacity by up to 6-8 times compared to CD-R's.

Blu-ray® discs (Blu-ray® disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. aluminium, gold or copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating or soaking. The preferred process in industry is spin coating to form an optical layer of about 70 nm to 250 nm thickness. For the application in the spin coating process, the material of the optical layer has to be highly soluble in organic solvents.

**EP 1 149 873 A1** (Kabushiki) discloses mono-styryl dyes and their use in optical layers for optical data recording media. In particular **EP 1 149 873 A1** discloses mono-styryl dyes of the following general structure:

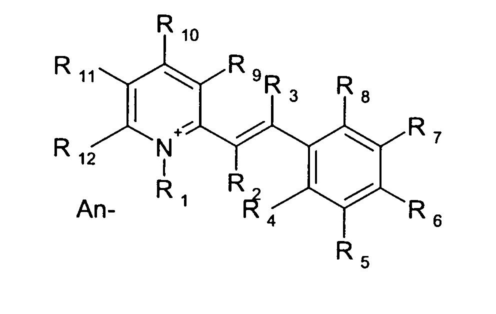

Beside various substitutions on all moieties of the above general struture (R₁ to R₁₂), counter ion An- is described to be a classical inorganic anion such as iodine, chlorine, fluorine or perchlorate or an organic anion such as methylsulfate, tosylate or nonconventional organic anions such as hexafluoroantimonate, tetrafluoroborate or azo-metal complexes.

**JP60239739** (Canon KK) disclosed the potential use of bis-styryl compounds for optical data recording media, wherein the dye is comprised in a clathrate complex with host/guest molecules with hydrophilic and hydrophobic parts, forming a monomolecular film. The bis-styryl compounds are not quatemized on the nitrogen ring.

**Nethsinghe et al.** (Angew. Makromol. Chem. 1987, 148, 161-193) discloses the use of bis-styryl compounds in oligomer synthesis.
**GB 1 189 330 A**(B.P. Chemicals) discloses the use of bis-styryl compounds as herbicidal products.
**EP 1 318 177 A1** (Dyomics) discloses the following structure for pharmaceutical and biotechnological applications:

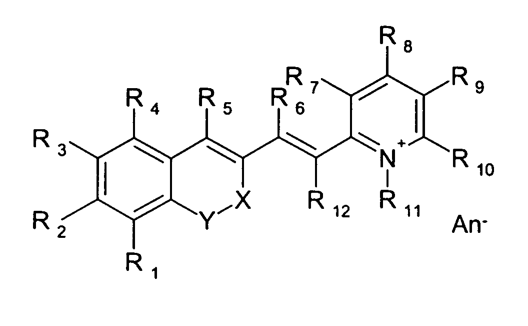

Surprisingly it has been found, that bis-styryl compounds as described below are useful as dye compounds in optical layers for optical data recording media.

The present invention therefore relates to an optical layer comprising bis-styryl compounds as described below and to the use of said optical layers for optical data recording media.

More particularly, the invention relates to a write only read many (WORM) type optical data recording medium capable of recording and reproducing information with radiation of blue laser of preferably 405 nm, which employ a bis-styryl type dye in the optical layer.

The present invention is directed to an optical layer comprising at least one dye compound of formulae (I) or (II). 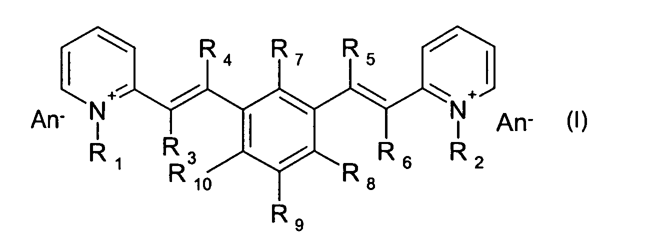 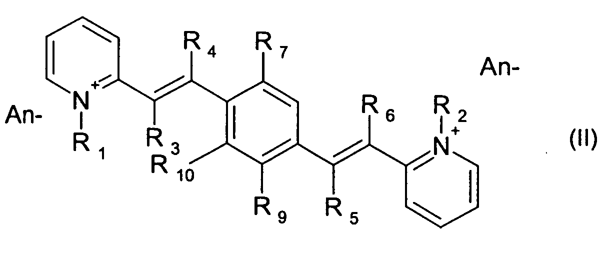 wherein
- R₁ and R₂: independently of one another, represent benzyl or C₁₋₈ alkyl being unsubstituted or substituted by hydroxy (-OH), C₆₋₁₂ aryl, halogen, -NR₁₁R₁₂, in which R₁₁ and R₁₂ are independently hydrogen, C₁₋₈ alkyl or C₆₋₁₂ aryl;
- R₃ to R₆: independently of one another, represent hydrogen, cyano (CN), C₁₋₆ alkyl;
- R₇ to R₁₀: independently of one another, represent hydrogen, halogen, cyano (CN), nitro (NO₂), hydroxy, C₁₋₈ alkyl, wherein the alkyl can be unsubstituted or substituted by hydroxy (-OH), C₆₋₁₂ aryl or -NR₁₃R₁₄ in which R₁₃ and R₁₄ are independently hydrogen, C₁₋₈ alkyl or C₆₋₁₂ aryl, CX₃ where X can be chlorine, fluorine, bromine, -NR₁₃R₁₄ in which R₁₃ and R₁₄ are independently hydrogen, C₁₋₈ alkyl or C₆₋₁₂ aryl,
- An-: is an anionic counter-ion selected from inorganic anions such as iodine, fluorine, bromine, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.

In a preferred aspect, the present invention is directed to an optical layer comprising at least one dye compound of formulae (I) or (II) wherein
- R₁ and R₂: independently of one another, represent benzyl or C₁₋₈ alkyl being unsubstituted;
- R₃ to R₆: independently of one another, represent hydrogen, cyano (CN), C₁₋₆ alkyl;
- R₇ to R₁₀: independently of one another, represent hydrogen, halogen, cyano (CN), nitro (NO₂), hydroxy, C₁₋₈ alkyl, CX₃ where X can be chlorine, fluorine, bromine, -NR₁₃R₁₄ in which R₁₃ and R₁₄ are independently hydrogen, C₁₋₈ alkyl or C₆₋₁₂ aryl,
- An-: is an anionic counter-ion selected from inorganic anions such as iodine, fluorine, bromine, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.

In a more preferred aspect, the present invention is directed to an optical layer comprising at least one dye compound of formulae (I) or (II), wherein
- R₁ and R₂: independently of one another, represent C₁₋₄ alkyl;
- R₃ to R₆: independently of one another, represent hydrogen, cyano (CN);
- R₇ to R₁₀: independently of one another, represent hydrogen, halogen, hydroxy, C₁₋₈ alkyl, -NR₁₃R₁₄ in which R₁₃ and R₁₄ are independently hydrogen or C₁₋₈ alkyl;
- An-: is an anionic counter-ion selected from inorganic anions such as iodine, fluorine, bromine, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.

In a most preferred embodiment, the present invention is directed to an optical layer comprising at least one dye compound of formulae (I) or (II), wherein
- R₁ and R₂: independently of one another, represent methyl, ethyl, n-propyl or n- butyl;
- R₃ to R₆: represent hydrogen;
- R₇ to R₁₀: independently of one another, represent hydrogen, halogen, hydroxy, C₁₋₈ alkyl, -NR₁₃R₁₄ in which R₁₃ and R₁₄ are independently hydrogen or C₁₋₈ alkyl;
- An-: is an anionic counter-ion selected from inorganic anions such as hexafluoroantimonate, hexafluorophosphate, or organic anions such as dicyanoamide (N(CN)₂) or trifluoromethanesulfonimide (N(SO₂CF₃)₂.

### Compounds of formula (I) are particularily preferred.

An optical layer according to the invention may also comprise a mixture of two or more, preferably of two dye compounds of formulae (I) or (II) as defined above. Preferred mixtures are mixtures of one formula (I) type dye with one formula (II) type dye.

It is a particular object of the invention to provide bis-styryl dyes wherein the ring-nitrogen atoms are quatemized, i.e. in the above formula (I) or (II) explicitly not allowing for the definition of R₁ and/or R₂ being hydrogen.

The quatemized bis-styryl dye compounds of formula (I) or (II) provide for particularily preferable properties when used in optical layers for optical data recording media according to the invention.

Further, the invention relates to a method for producing optical layers comprising the following steps
(a) providing a substrate
(b) dissolving a dye compound or a mixture of dye compounds of formula (I) or (II) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from C₁₋₈ alcohol , halogen substituted C₁₋₈ alcohols, C₁₋₈ ketone, C₁₋₈ ether, halogen substituted C₁₋₄ alkane, or amides.
Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.
Preferred amides are for example dimethylformamide or dimethylacetamide.

The optical layer (dye layer) obtained preferably has a thickness from 70 to 250 nm.

In a preferred aspect, the present invention provides for an optical layer suitable for high-density recording material, e.g. of the WORM disc format, in a laser wavelength range of from 350-450nm, preferably around 405 nm.

The dye compounds of formula (I) or (II) possess the required optical characteristics (such as high absortivity, high recording sensitivity as example), an excellent solubility in organic solvents, an excellent light stability and a decomposition temperature of 250-300°C.

### Preparation of bis-styryl type dyes according to the invention

The bis-styryl dye compounds of formulae (I) and (II) are obtained by anionic exchange involving compound (E-1), (E-2), (E-3) or (E-4) with the corresponding ion pair (counterion) (F) in a polar solvent, in a ratio of 1:2.
Compounds (E-1), (E-2), (E-3) and (E-4) are obtained by condensation reaction of compound (C-1) or (C-2) with compound (D-1) or (D-2) in a ratio of from 2:1 up to preferably a ratio of 2.2:1, in polar solvent in the presence of an organic base as catalyst. Compounds (C-1) and (C-2) are obtained by alkylation reaction of compound (A) with a compound of formula (B-1) or (B-2) respectively in a ratio of from 1:1 up to preferably a ratio of 1:1.1 and in a polar solvent. 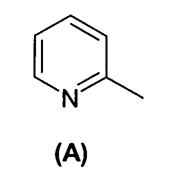 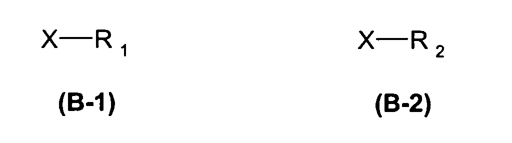 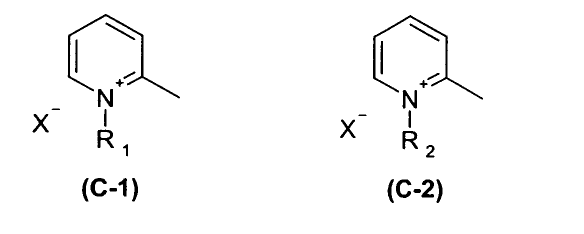 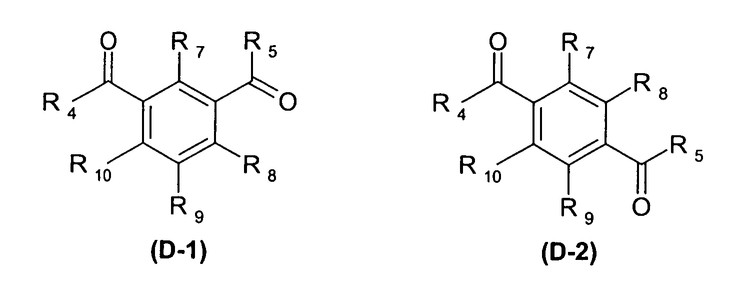 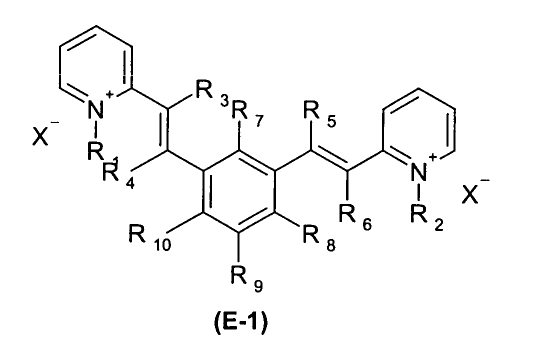 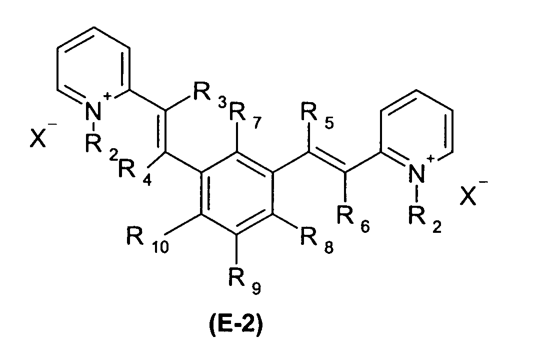 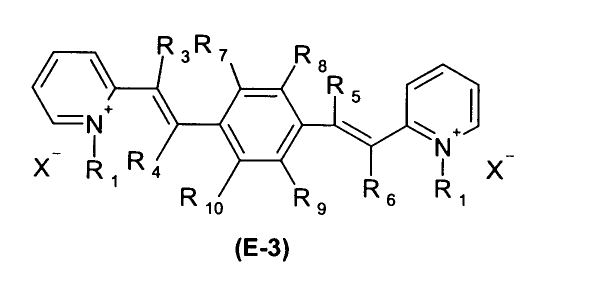 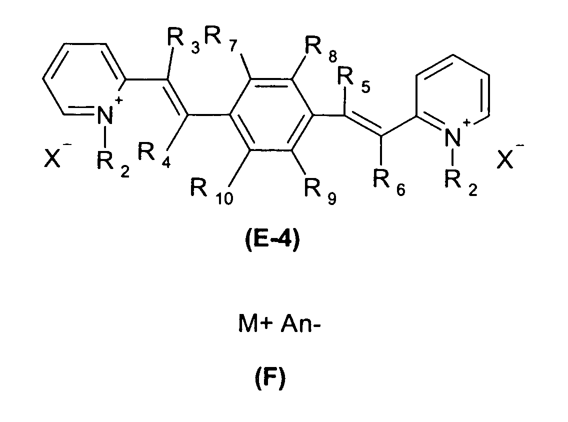 wherein X is bromine, chlorine or iodide, R₁ to R₁₀ are defined as above, M+ is a cationic metal selected from sodium or potassium and An- is an anionic counter-ion selected from inorganic anions such as iodine, fluorine, bromine, hexafluoroantimonate, hexafluorophosphate, tetrafluoroborate, tetraphenylborate or from organic anions such as dicyanoamide (N(CN)₂) or trifluoromethanesulfonimide (N(SO₂CF₃)₂.

The process for preparation can be described by the following steps:
(a) an alkylation reaction between **(A)** and **(B-1) or (B-2)** to form an ionic compound **(C-1)** or **(C-2).**
(b) a condensation reaction between an ionic compound **(C-1)** or **(C-2)** and a (substituted) phthalaldehyde **(D-1)** or **(D-2),** leading to compound **(E-1), (E-2), (E-3)** or **(E-4).**
(c) an anion exchange with the ion pair **(F)** and **(E-1), (E-2), (E-3)** or **(E-4).**

The preferred solvent used in the alkylation reaction (step (a)) is acetone, or methylethylcetone.

The preferred solvents used in the condensation reaction (step (b)) are selected from the group consisting of C₁₋₈ alcohols, dimethylformamide (DMF), N-methylpyrolidone (NMP) or a mixture of one of these solvents with water or water itself.
Most preferred solvents are dimethylformamide (DMF) or N-methylpyrolidone (NMP).

The preferred organic bases used in the condensation reaction (step (b)) are selected from the group consisting of pyridine, piperidine or, triethylamine.
The most preferred organic base used in the process is piperidine.

### Preparation of high density optical data recording medium

The preparation of a high density optical data recording medium / a high density optical disc conventionally comprises the following steps:
(a) providing a first substrate
(b) dissolving the dye in an organic solvent to form a solution,
(c) coating the first solution on the first substrate;
(d) drying the solution to form a dye layer and
(e) disposing a reflection layer on the dye layer and
(f) disposing a second substrate on the reflection layer

In step (f), preferably a second substrate is bonded with the first substrate to form the high-density optical disc recording medium. Conventional techniques for bonding are printing, glueing or melting.

### EXAMPLES

All bis-styryl dye compounds were prepared using standard procedures known in the art, involving reaction of the appropriate alkylating agent with the picoline compound in a 1:1 molar ratio in methylethylcetone. The alkyl picolinium compounds are then condensed with (substituted) phthalaldehyde in a 2:1 ratio, in polar solvent, i.e. ethanol, in presence of organic base as catalyst, i.e. piperidine. Finally, the intermediate bis-styryl dye is reacted in an ion exchange reaction with an ion pair in a 1:2 ratio or in a 1:1 ration based on the nature of the ion pair used for the exchange reaction, in a polar solvent, i.e. methylethylcetone.

### Example 1

a) 15 parts of α-picoline are stirred with 22.7 parts of methyl iodide in 50 parts of methylethylcetone for 12 hours. Then the mixture is cooled to 25°C , filtered and washed with 10 parts of methylethylceteone. The colorless presscake is dried and the final methylpicolinium iodide is obtained with 98% yield.
b) 10 parts of previously obtained compound are mixed with 2.8 parts of isophthalaldehyde in 50 parts of ethanol and 1 part of piperidine. The whole mixture is heated to reflux and stirred for 12 hours. Reaction mixture is then cooled to 25°C, filtered and washed with 30 parts of methanol. The yellowish presscake is then dried and the following bis-styryl dye is obtained: 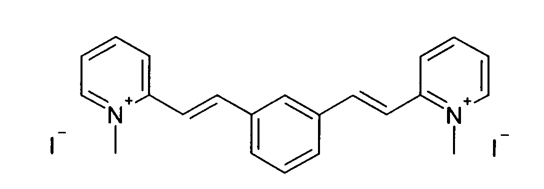
Yield: 98%; UV-Vis (EtOH) λₘₐₓ: 348 nm; ε (λₘₐₓ): 39000 l.mol⁻¹.cm⁻¹
MS (positive mode): 314.5 (M+), 315.5 (M+1), 316.5 (M+2)

### Example 2

5 parts of the compound of example 1 are mixed with 1.6 parts of sodium dicyanoamide in 35 parts of methylethylcetone and the mixture is stirred for lé hours at reflux temperature. Reaction mixture is then filtered hot and washed with 100 parts of hot water until no sodium iodide is detectable in the filtrate. The yellowish presscake is dried and the following bis-styryl dye is obtained as described below: 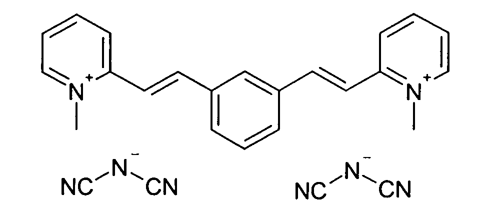 Yield: 96%; Decomp. point (DSC; sharp): 330°C; UV-Vis (EtOH) λₘₐₓ: 346 nm; ε (λₘₐₓ): 35000 1.mol⁻¹.cm⁻¹
MS (positive mode): 314.5 (M+), 315.5 (M+1), 316.5 (M+2)

### Example 3

This dye is synthesized according to the procedure described in example 1, however with SbF₆⁻ as counterion. 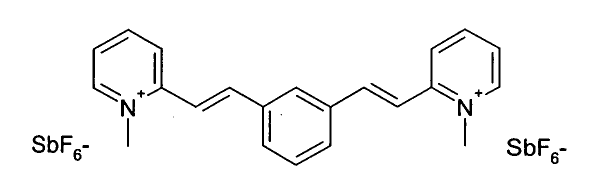 Yield: 96%; Decomp. point (DSC; sharp): 270°C; UV-Vis (EtOH) λₘₐₓ: 350 nm; ε (λₘₐₓ): 45000 l.mol⁻¹.cm⁻¹

### Example 4

This dye is synthesized according to the procedure described in example 1, however with PF₆⁻ as counterion. 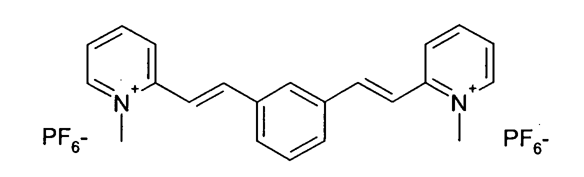 Yield: 97%; Decomp. point (DSC; sharp): 260°C ; UV-Vis (EtOH) λₘₐₓ: 348 nm; ε (λₘₐₓ): 47000 l.mol⁻¹.cm⁻¹

### Example 5

This dye has been obtained using the same procedure as in exampel 1 but involving in step b) the terephthalaldehyde as starting material (para-isomer) instead of the isophthalaldehyde (meta-isomer). 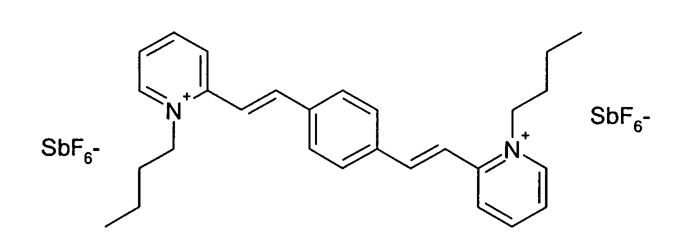 Yield: 95%; Decomp. point (DSC; sharp): 260°C; UV-Vis (EtOH) λₘₐₓ: 382 nm; ε (λₘₐₓ): 40000 l.mol⁻¹.cm⁻¹
MS (positive mode): 398.6 (M+), 399.6 (M+1)

### Application Example

The optical and thermal properties of the bis-styryl dye compounds were studied. The dyes show high absorption at the desired wavelengths. In addition, the shape of the absorption spectra, that still remains critical to the disc reflectivity and formation of clean mark edges, are composed of one major band, comprised in a range of from 350 to 500 nm, preferably of from 350 to 400 nm.
More precisely, n values of the refractive index were evaluated between 2.3 and 2.7. Light stabilities were found comparable to commercial dyes which usually are stabilised with quenchers for the use in optical data recording.
Sharp threshold of thermal decomposition in the required temperature range characterizes the new bis-styryl dyes which is assumed to be desirable for the application in optical layers for optical data recording.
As a conclusion, the bis-styryl dye compounds are within the specifications which are primarily required by the industry for the use of dyes in optical data recording, in particular in the next-generation optical data recording media (blu-ray disc) in the blue laser range.

## Claims

1. An optical layer comprising at least one dye compound of formulae (I) or (II) 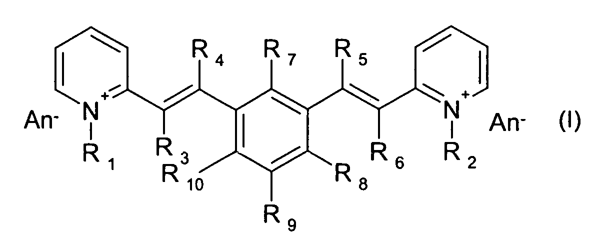 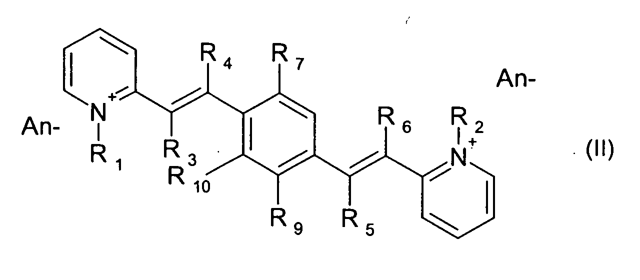 wherein
R₁ and R₂ independently of one another, represent benzyl or C₁₋₈ alkyl being unsubstituted or substituted by hydroxy (-OH), C₆₋₁₂ aryl, halogen, -NR₁₁R₁₂, in which R₁₁ and R₁₂ are independently hydrogen, C₁₋₈ alkyl or C₆₋₁₂ aryl;
R₃ to R₆ independently of one another, represent hydrogen, cyano (CN), C₁₋₆ alkyl;
R₇ to R₁₀ independently of one another, represent hydrogen, halogen, cyano (CN), nitro (NO₂), hydroxy, C₁₋₈ alkyl, wherein the alkyl can be unsubstituted or substituted by hydroxy (-OH), C₆₋₁₂ aryl or -NR₁₃R₁₄ in which R₁₃ and R₁₄ are independently hydrogen, C₁₋₈ alkyl or C₆₋₁₂ aryl, CX₃ where X can be chlorine, fluorine, bromine, -NR₁₃R₁₄ in which R₁₃ and R₁₄ are independently hydrogen, C₁₋₈ alkyl or C₆₋₁₂ aryl,
An- is an anionic counter-ion selected from inorganic anions such as iodine, fluorine, bromine, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.

2. An optical layer according to claim 1, wherein
R₁ and R₂ independently of one another, represent benzyl or C₁₋₈ alkyl;
R₃ to R₆ independently of one another, represent hydrogen, cyano (CN), C₁₋₆ alkyl;
R₇ to R₁₀ independently of one another, represent hydrogen, halogen, cyano (CN), nitro (NO₂), hydroxy, C₁₋₈ alkyl, CX₃ where X can be chlorine, fluorine, bromine, -NR₁₃R₁₄ in which R₁₃ and R₁₄ are independently hydrogen, C₁₋₈ alkyl or C₆₋₁₂ aryl,
An- is an anionic counter-ion selected from inorganic anions such as iodine, fluorine, bromine, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.

3. An optical layer according to claim 1, wherein
R₁ and R₂ independently of one another, represent C₁₋₄ alkyl;
R₃ to R₆ independently of one another, represent hydrogen, cyano (CN);
R₇ to R₁₀ independently of one another, represent hydrogen, halogen, hydroxy, C₁₋₈ alkyl, -NR₁₃R₁₄ in which R₁₃ and R₁₄ are independently hydrogen or C₁₋₈ alkyl;
An- is an anionic counter-ion selected from inorganic anions such as iodine, fluorine, bromine, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.

4. An optical layer according to claim 1, wherein
R₁ and R₂ independently of one another, represent methyl, ethyl, n-propyl or n-butyl;
R₃ to R₆ represent hydrogen;
R₇ to R₁₀ independently of one another, represent hydrogen, halogen, hydroxy, C₁₋₈ alkyl, -NR₁₃R₁₄ in which R₁₃ and R₁₄ are independently hydrogen or C₁₋₈ alkyl;
An- is an anionic counter-ion selected from inorganic anions such as hexafluoroantimonate, hexafluorophosphate, or organic anions such as dicyanoamide (N(CN)₂) or trifluoromethanesulfonimide (N(SO₂CF₃)₂.

5. An optical layer comprising a mixture of at least two dye compounds according to formula (I) or formula (II) as defined in claims 1 to 4.

6. A method for producing optical layers according to claims 1 to 5, comprising the following steps
(a) providing a substrate
(b) dissolving a dye compound or a mixture of dye compounds of formula (I) or (II) as defined in claims 1 to 4 in an organic solvent to form a solution,
(c) coating the solution (b) on the substrate (a);
(d) evaporating the solvent to form a dye layer.

7. A method according to claim 6, wherein the substrate is polycarbonate (PC) or polymethylmethacrylate (PMMA).

8. A method according to claim 6, wherein the organic solvent is selected from C₁₋₈ alcohol , halogen substituted C₁₋₈ alcohols, C₁₋₈ ketone, C₁₋₈ ether, halogen substituted C₁₋₄ alkane, or amides.

9. A method according to claim 6, wherein the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and
the amides are selected from dimethylformamide or dimethylacetamide.

10. A method according to claim 6, wherein the optical layer (dye layer) has a thickness from 70 to 250 nm.

11. An optical recording medium comprising an optical layer according to claims 1 to 5.

12. An optical recording medium capable of recording and reproducing information with radiation of blue laser at 405 nm, comprising an optical layer according to claims 1 to 5.
